(19) Europäisches Patentamt / European Patent Office / Office européen des brevets

(11) **EP 4 220 974 A1**

(12) **EUROPEAN PATENT APPLICATION**
published in accordance with Art. 153(4) EPC

(43) Date of publication:
**02.08.2023 Bulletin 2023/31**

(21) Application number: **21870963.2**

(22) Date of filing: **14.07.2021**

(51) International Patent Classification (IPC):
**H04B 1/40** (2015.01)

(52) Cooperative Patent Classification (CPC):
Y02D 30/70

(86) International application number:
**PCT/CN2021/106210**

(87) International publication number:
**WO 2022/062585 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2020 CN 202011032842**

(71) Applicant: **GUANGDONG OPPO MOBILE TELECOMMUNICATIONS CORP., LTD.**
**Dongguan, Guangdong 523860 (CN)**

(72) Inventor: **FENG, Bin**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **RADIO FREQUENCY L-PA MID DEVICE, RADIO FREQUENCY TRANSCEIVING SYSTEM, AND COMMUNICATION EQUIPMENT**

(57) Provided is a radio-frequency L-PA Mid device. The radio-frequency L-PA Mid device has a medium-frequency transmitting port and a high-frequency transmitting port that are configured to connect to a radio-frequency transceiver, and a plurality of antenna ports configured to connect to an antenna. The radio-frequency L-PA Mid device includes: a first transmitting circuit (110) configured to receive 4G signals in a plurality of medium-frequency bands and perform amplification and filtering processing on the received 4G signals in the plurality of medium-frequency bands; a second transmitting circuit (120) configured to receive a 5G signal and perform amplification and filtering processing on the received 5G signal; a radio-frequency switching circuit (130) connected to the first transmitting circuit (110), the second transmitting circuit (120), and the plurality of antenna ports; and a control module (140) configured to control the radio-frequency switching circuit (130) to simultaneously switch on a radio-frequency path where the first transmitting circuit (110) is located and a radio-frequency path where the second transmitting circuit (120) is located.

FIG. 1

**Description**

**CROSS-REFERENCE TO RELATED APPLICATIONS**

This application claims priorities to Chinese Patent Applications No. 2020110328427, entitled "RADIO-FREQUENCY L-PA MID DEVICE, RADIO-FREQUENCY TRANSCEIVING SYSTEM, AND COMMUNICATION APPARATUS", filed with China National Intellectual Property Administration on September 27, 2020, the entire disclosures of which is incorporated herein by reference.

**FIELD**

The present disclosure relates to the field of radio-frequency technologies, and particularly, to a radio-frequency Power Amplifier Modules including Duplexers With LNA (L-PA Mid) device, a radio-frequency transceiving system, and a communication apparatus.

**BACKGROUND**

This section provides only background information relevant to the present disclosure and does not necessarily constitute exemplary related art.

With the development and advancement of technology, 5th Generation (5G) mobile communication technology has been increasingly applied to electronic devices. 5G mobile communication technology has a higher communication frequency than 4G mobile communication technology. Generally, in a radio-frequency structure, different power amplification modules are used to perform transceiving control on radio-frequency signals in different communication systems (e.g., 4G signals and 5G signals), and power amplification modules of the radio-frequency signals in different communication systems are relatively independent. Hence, the radio-frequency structure has relatively high design costs and occupies a large area.

**SUMMARY**

Embodiments of the present disclosure provide a radio-frequency L-PAMid device, a radio-frequency transceiving system, and a communication apparatus.

A radio-frequency L-PA Mid device has a medium-frequency transmitting port and a high-frequency transmitting port that are configured to connect to a radio-frequency transceiver, and a plurality of antenna ports configured to connect to an antenna. The radio-frequency L-PA Mid device includes a first transmitting circuit, a second transmitting circuit, a radio-frequency switching circuit, and a control module. The first transmitting circuit is connected to the medium-frequency transmitting port. The first transmitting circuit is configured to receive 4G signals in a plurality of medium-frequency bands and perform amplification and filtering processing on the received 4G signals. The second transmitting circuit is connected to the high-frequency transmitting port. The second transmitting circuit is configured to receive a 5G signal and perform amplification and filtering processing on the received 5G signal. The radio-frequency switching circuit is connected to the first transmitting circuit, the second transmitting circuit, and the plurality of antenna ports. The radio-frequency switching circuit is configured to switch on a path between the first transmitting circuit and one of the plurality of antenna ports and a path between the second transmitting circuit and another one of the plurality of antenna ports. The control module is connected to the first transmitting circuit, the second transmitting circuit, and the radio-frequency switching circuit. The control module is configured to control the radio-frequency switching circuit to simultaneously switch on a radio-frequency path where the first transmitting circuit is located and a radio-frequency path where the second transmitting circuit is located, for supporting simultaneous transmission of the 4G signals in the medium-frequency bands and the 5G signal.

A radio-frequency transceiving system includes the above-mentioned radio-frequency L-PA Mid device, an antenna assembly, and a radio-frequency transceiver connected to the radio-frequency L-PA Mid device. The antenna assembly includes a first antenna and a second antenna. The first antenna is connected to one of the plurality of antenna ports of the radio-frequency L-PA Mid device and configured to transceive radio-frequency signals. The second antenna is connected to another one of the plurality of antenna ports of the radio-frequency L-PA Mid device and configured to transceive the radio-frequency signals.

A communication apparatus includes the above-mentioned radio-frequency transceiving system.

The above-mentioned radio-frequency L-PA Mid device, radio-frequency transceiving system, and communication apparatus can simultaneously switch on a path between the first transmitting circuit and a corresponding antenna port ANT and a path between the second first transmitting circuit and the corresponding antenna port ANT, thereby switching on the radio-frequency path where the first transmitting circuit is located and a radio-frequency path where the second transmitting circuit is located. Thus, the radio-frequency L-PA Mid device to support simultaneous transmission of 4G and 5G signal in any medium-frequency bands. That is, the radio-frequency L-PA Mid device can realize dual connectivity of 5G frequency band and 4G signal in the medium-frequency band and can also amplify the 5G signal without requiring an additional add-on power amplifier module supporting the 5G frequency band, thereby greatly increasing an integration level of the device and reducing an occupied space of the device and reducing costs of the device.

One or more of the embodiments of the present disclosure are described in detail below in combination with the accompanying drawings. Other features, objects and advantages of the present disclosure will become apparent from the specification, the accompanying drawings, and the claims as attached.

## BRIEF DESCRIPTION OF THE DRAWINGS

In order to clearly explain technical solutions according to the embodiments of the present disclosure or in the related art, drawings used in the description of the embodiments or the related art are briefly described below. Obviously, the drawings described below are merely some embodiments of the present disclosure. Based on these drawings, other drawings can be obtained by those skilled in the art without creative effort.

FIG. 1 is a first structural block diagram of a radio-frequency L-PA Mid device according to an embodiment of the present disclosure.
FIG. 2 is a second structural block diagram of a radio-frequency L-PA Mid device according to an embodiment of the present disclosure.
FIG. 3 is a third structural block diagram of a radio-frequency L-PA Mid device according to an embodiment of the present disclosure.
FIG. 4 is a fourth structural block diagram of a radio-frequency L-PA Mid device according to an embodiment of the present disclosure.
FIG. 5 is a fifth structural block diagram of a radio-frequency L-PA Mid device according to an embodiment of the present disclosure.
FIG. 6 is a sixth structural block diagram of a radio-frequency L-PA Mid device according to an embodiment of the present disclosure.
FIG. 7 is a seventh structural block diagram of a radio-frequency L-PA Mid device according to an embodiment of the present disclosure.
FIG. 8 is an eighth structural block diagram of a radio-frequency L-PA Mid device according to an embodiment of the present disclosure.
FIG. 9 is a ninth structural block diagram of a radio-frequency L-PA Mid device according to an embodiment of the present disclosure.
FIG. 10 is a tenth structural block diagram of a radio-frequency L-PA Mid device according to an embodiment of the present disclosure.
FIG. 11 is an eleventh structural block diagram of a radio-frequency L-PA Mid device according to an embodiment of the present disclosure.
FIG. 12 is a twelfth structural block diagram of a radio-frequency L-PA Mid device according to an embodiment of the present disclosure.
FIG. 13 is a first structural block diagram of a radio-frequency transceiving system according to an embodiment of the present disclosure.
FIG. 14 is a second structural block diagram of a radio-frequency transceiving system according to an embodiment of the present disclosure.
FIG. 15 is a third structural block diagram of a radio-frequency transceiving system according to an embodiment of the present disclosure.
FIG. 16 is a fourth structural block diagram of a radio-frequency transceiving system according to an embodiment of the present disclosure.
FIG. 17 is a fifth structural block diagram of a radio-frequency transceiving system according to an embodiment of the present disclosure.

## DETAILED DESCRIPTION

In order to facilitate understanding of the present disclosure and to clarify the above-mentioned objects, features, and advantages of the present disclosure, specific embodiments of the present disclosure are described in detail below in conjunction with the accompanying drawings. In the following description, many specific details are provided to facilitate full understanding of the present disclosure. Preferred embodiments of the present disclosure are illustrated by means of the accompanying drawings. However, the present disclosure can be implemented in various forms and is not limited to the embodiments described herein. On the contrary, these embodiments are merely provided to facilitate thorough and comprehensive understanding of the content of the present disclosure. The present disclosure can be implemented in various manners other than those described herein, and similar improvements can be made by those skilled in the art without contradicting the intent of the present disclosure. Therefore, the present disclosure is not limited by specific embodiments disclosed below.

In addition, the term "first" or "second" is only for descriptive purposes, and it cannot be indicating or implying relative importance or implicitly indicating the number of indicated technical features. Therefore, the features defined with "first" or "second" can explicitly or implicitly include at least one of the features. In the description of the present disclosure, "plurality of" means at least two, unless otherwise specifically indicated. In the present disclosure, "a number of" means at least one, unless otherwise specifically indicated.

A radio-frequency L-PA Mid device involved in the embodiments of the present disclosure can be applied to a communication apparatus having a wireless communication function. The communication apparatus may be a handheld device, a vehicle-mounted device, a wearable device, a computing device or other processing devices connected to a wireless modem, various forms of User Equipment (UE) (e.g., mobile phones), Mobile Stations (MS), etc. For ease of description, the above-mentioned devices are all referred to as the communication apparatus. A network device may include a base station, an access point, etc.

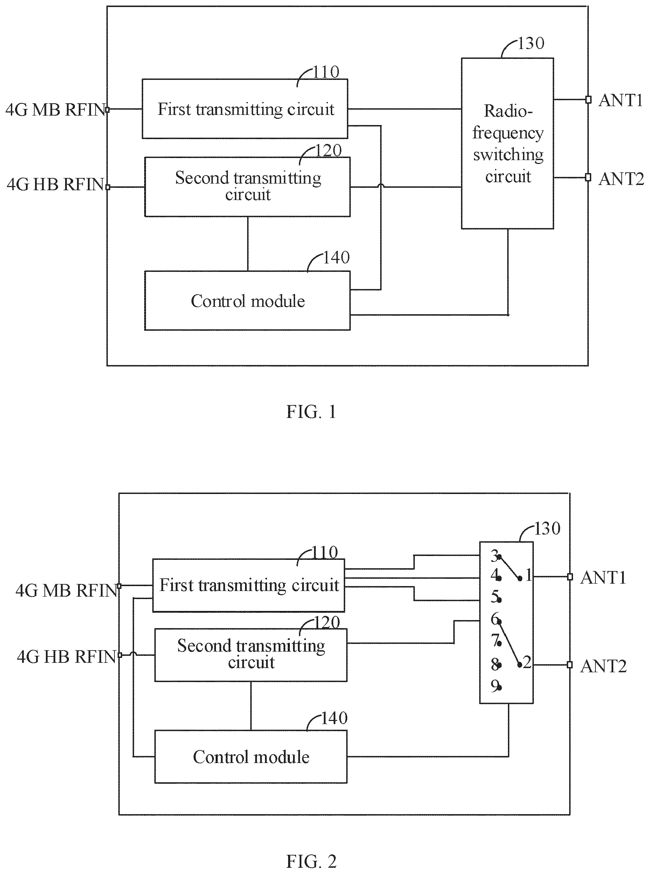

As illustrated in FIG. 1, according to an embodiment of the present disclosure, a radio-frequency L-PA Mid device is provided. The radio-frequency L-PA Mid device can be regarded as a Power Amplifier Modules including Duplexers With LNA (L-PA Mid). The radio-frequency L-PA Mid device may support reception and transmission of 4G signals and 5G signals in a plurality of different frequency bands. The 4G signals in a plurality of different medium-frequency bands may include LTE signals in a B1 frequency band, a B3 frequency band, a B25 frequency band, a B34 frequency band, a B66 frequency band, a B39 frequency band, a B30 frequency band, a B7 frequency band, a B40 frequency band, and a B41 frequency band. The 5G signals may at least include an NR signal in an N41 frequency band. Therefore, the radio-frequency L-PA Mid device in an embodiment of the present disclosure may also be referred to as a Middle and High Band PA Mid With LNA (MHB L-PA Mid).

In an embodiment, the radio-frequency L-PA Mid device can be regarded as a packaged structure. The radio-frequency L-PA Mid device has a medium-frequency transmitting port 4G MB RFIN and a high-frequency transmitting port 4G HB RFIN that are configured to connect to a radio-frequency transceiver, and a plurality of antenna ports ANT configured to connect to an antenna. The medium-frequency transmitting port 4G MB RFIN, the high-frequency transmitting port 4G HB RFIN, and the plurality of antenna ports ANT can be regarded as radio-frequency pin terminals of the radio-frequency L-PA Mid device for connecting to various external devices. In the embodiments of the present disclosure, the radio-frequency L-PA Mid device has at least two antenna ports ANT, i.e., a first antenna port ANT1 and a second antenna port ANT2.

In an embodiment, the medium-frequency transmitting port 4G MB RFIN is configured to receive the 4G signals in the plurality of medium-frequency bands transmitted by the radio-frequency transceiver. The radio-frequency L-PA Mid device may perform filtering and amplification processing on the input 4G signals in the plurality of medium-frequency bands to output the 4G signal to the first antenna port ANT1, and the antenna connected to the first antenna port ANT1 transmits the 4G signal, thereby realizing a transmitting control of a plurality of medium-frequency signals. The high-frequency transmitting port 4G HB RFIN is configured to receive a 5G signal and a plurality of high-frequency 4G signals transmitted by the radio-frequency transceiver. The radio-frequency L-PA Mid device may perform filtering and amplification processing on the input 5G signal and the plurality of high-frequency 4G signals to output the 5G signal and the plurality of high-frequency 4G signals to the second antenna port ANT2, and the antenna connected to the second antenna port ANT2 transmits the 5G signal and the plurality of high-frequency 4G signals, thereby realizing a transmitting control of the plurality of high-frequency 4G signals. The first antenna port ANT1 may be configured to receive a plurality of medium-frequency 4G signals received by the antenna, and the second antenna port ANT2 may be configured to receive a 5G signal and a plurality of high-frequency 4G signals received by the antenna. The radio-frequency L-PA Mid device may perform filtering and amplification processing on the input 4G signals in the plurality of frequency bands and the 5G signal. The 4G and 5G signals are outputted to a corresponding receiving port LNA OUT, and transmitted to the radio-frequency transceiver through the receiving port LNA OUT, thereby realizing a transmitting control of the plurality of 4G signals and the 5G signal.

The radio-frequency L-PA Mid device includes a first transmitting circuit 110, a second transmitting circuit 120, a radio-frequency switching circuit 130, and a control module 140. The control module 140 is connected to the first transmitting circuit 110, the second transmitting circuit 120, and the radio-frequency switching circuit 130. The control module 140 can control a signal (a communication system and a frequency band of the signal) input to the first transmitting circuit 110 and the second transmitting circuit 120, enabling the first transmitting circuit 110 and the second transmitting circuit 120 to receive signals in different communication systems and frequency bands.

The first transmitting circuit 110 is connected to the medium-frequency transmitting port 4G MB RFIN. The first transmitting circuit 110 is configured to receive 4G signals in a plurality of medium-frequency bands and perform amplification and filtering processing on the received 4G signals in the plurality of medium-frequency bands. That is, the first transmitting circuit 110 can realize the transmitting control of the plurality of 4G signals, for example, the transmitting control of 4G signals in the medium-frequency bands such as the B1 frequency band, the B3 frequency band, the B34 frequency band, the B39 frequency band, the B66 frequency band, and the B25 frequency band.

The second transmitting circuit 120 is connected to the high-frequency transmitting port 4G HB RFIN. The second transmitting circuit is configured to receive a 5G signal and perform amplification and filtering processing on the received 5G signal. That is, the second transmitting circuit 120 can realize a transmitting control of the 5G signal, for example, the transmitting control of a 5G signal in the N41 frequency band. Meanwhile, the second transmitting circuit 120 may be further configured to receive 4G signals in the plurality of high-frequency bands, and perform amplification and filtering processing on the received 4G signals in the plurality of high-frequency bands. For example, the second transmitting circuit 120 can realize the transmitting control of 4G signals in the B7 frequency band, the B40 frequency band, and the B41 frequency band.

Under control of the control module 140, the first transmitting circuit 110 and the second transmitting circuit 120 may process the received signals simultaneously. For example, under the control of the control module 140, the first transmitting circuit 110 may process the received 4G signal in any of the medium-frequency bands, such as a B3 signal, and meanwhile, the second transmitting circuit 120 may process the received 5G signal, for example, an N41 signal.

The radio-frequency switching circuit 130 is connected to the first transmitting circuit 110, the second transmitting circuit 120, and the plurality of antenna ports ANT. The radio-frequency switching circuit 130 is configured to switch on a path between the first transmitting circuit 110 and any one antenna port ANT and a path between the second transmitting circuit 120 and any one antenna port ANT. That is, the radio-frequency switching circuit 130 may switch on a path between the first transmitting circuit 110 and the antenna port ANT1 and a path between the second transmitting circuit 120 and the antenna port ANT2. The radio-frequency switching circuit 130 may include a plurality of first terminals and a plurality of second terminals. The plurality of first terminals of the radio-frequency switching circuit 130 may be connected to the first transmitting circuit 110 and the second transmitting circuit 120 in one-to-one correspondence, respectively. The plurality of second terminals of the radio-frequency switching circuit 130 may be connected to the plurality of antenna ports ANT in one-to-one correspondence, respectively.

Under the control of the control module 140, the radio-frequency switching circuit 130 may simultaneously switch on the path between the first transmitting circuit 110 and a corresponding antenna port ANT and the path between the second first transmitting circuit 120 and the corresponding antenna port ANT, and thus switch on the radio-frequency path where the first transmitting circuit 110 is located and the radio-frequency path where the second transmitting circuit 120 is located. In this way, the radio-frequency L-PAMid device can support simultaneous transmission of 4G signal in any one of the medium-frequency bands and 5G signal. For example, under the control of the control module 140, the first transmitting circuit 110 and the second transmitting circuit 120 may simultaneously process the received signal and switch on the radio-frequency path where the first transmitting circuit 110 is located and the radio-frequency path where the second transmitting circuit 120 is located to realize simultaneous transmission of the 4G signal in any medium-frequency band and 5G signal. That is, the radio-frequency L-PA Mid device can realize dual connectivity of 5G frequency band and 4G signal in the medium-frequency band and can also amplify the 5G signal without requiring an additional add-on power amplifier module supporting the 5G frequency band, thereby greatly increasing an integration level of the device and reducing costs of the device.

The radio-frequency L-PAMid device in the embodiments of the present disclosure may support 5th Generation mobile communication technology (5G or a 5G technology for short), and 5G is a latest generation of cellular mobile communication technology. 5G is divided into two modes for supporting Standalone Access (NA) and Non Standalone Access (NSA). The NSA is anchoring 5G control signaling on a 4G base station. The Standalone Access is directly accessing a 5G base station to a 5G core network, and the control signaling is independent of a 4G network. In the embodiments of the present disclosure, the NSA mode includes any one of EN-DC, NE-DC, and NGEN-DC frameworks. As an example, in an EN-DC mode of the NSA, E denotes Evolved-Universal Mobile Telecommunications System Terrestrial Radio Access (E-UTRA), which represents 4G wireless access of a mobile terminal; N denotes a New Radio (NR), which represents a 5G wireless connection of the mobile terminal; and DC denotes Dual Connectivity, which represents dual connectivity of 4G and 5G. In the EN-DC mode, a terminal device may simultaneously implement dual connectivity to the 4G base station and the 5G base station based on a 4G core network. Therefore, it is required for the EN-DC mode that the communication modules of 4G and 5G can work simultaneously. According to first stage specifications and requirements of 5G in 3 GPP Release-5, EN-DC combination is mainly as illustrated in Table 1.

[Table 1] ENDC combination

| 5G frequency band | ENDC combination |
| --- | --- |
| N41 | B3+N41/B39+N41 |

(continued)

| 5G frequency band | ENDC combination |
|---|---|
| N78 | B3+N78/B5+N78 |
| N79 | B3+N79 |

When the radio-frequency L-PA Mid device is applied in a radio-frequency transceiving system to support 5G communication of an NSA system, the radio-frequency L-PA Mid device may implement EN-DC combination of the B3 frequency band and the N41 frequency band, or implement EN-DC combination of the B39 frequency band and the N41 frequency band, without requiring an add-in 5GN41 PA Mid device for implementing the NSA system. In this way, the integration level of the device can be significantly increased, and the costs of the device can be reduced.

As illustrated in FIG. 2, in an embodiment, the antenna ports ANT include a first antenna port ANT1 and a second antenna port ANT2. The radio-frequency switching circuit 130 includes a multi-channel selection switch. The multi-channel selection switch has a plurality of first terminals connected to the first transmitting circuit 110 and the second transmitting circuit 120, and a plurality of second terminals. One of the plurality of second terminals is connected to the first antenna port ANT1, and another one of the plurality of second terminals is connected to the second antenna port ANT2. The multi-channel selection switch may be a DP7T switch. The DP7T switch has one second terminal (contact 1) connected to the first antenna port ANT1, and another second terminal (contact 2) connected to the second antenna port ANT2. The first terminals (contact 3, contact 4, contact 5, contact 6, contact 7, contact 8, contact 9) of the DP7T switch may be connected to a plurality of output terminals of the first transmitting circuit 110 and at least one output terminal of the second transmitting circuit 120 in one-to-one correspondence. Based on the radio-frequency L-PA Mid device as illustrated in FIG. 2, the control module 140 can control the DP7T switch to simultaneously switch on a radio-frequency path between the first transmitting circuit 110 and the first antenna port ANT1 and a radio-frequency path between the second transmitting circuit 120 and the second antenna port ANT2, thereby implementing the simultaneous transmission of the 4G signal in any medium-frequency band and 5G signal.

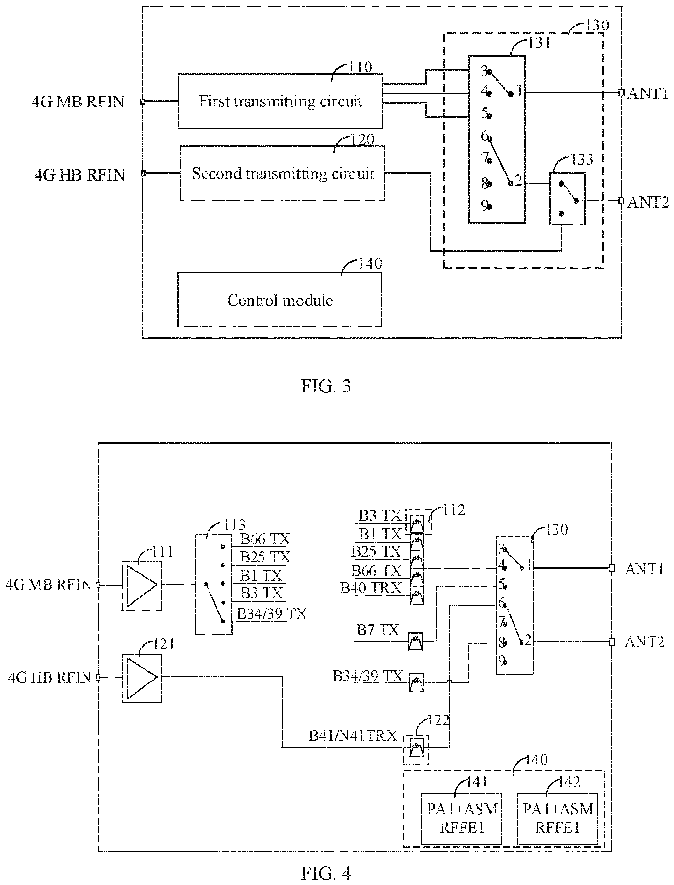

As illustrated in FIG. 3, in an embodiment, the antenna ports ANT include a first antenna port ANT1 and a second antenna port ANT2. The radio-frequency switching circuit 130 includes a first switching unit 131 and a second switching unit 133. The first terminals of the first switching unit 131 are connected to the first transmitting circuit 110. One second terminal of the first switching unit 131 is connected to one selection terminal of the second switching unit 133. Another second terminal of the first switching unit 131 is connected to the first antenna port ANT1. Another selection terminal of the second switching unit 133 is connected to the second transmitting circuit 120. A control terminal of the second switching unit 133 is connected to the second antenna port ANT2. In an embodiment, the first switching unit 131 may be the DP7T switch, and the second switching unit 133 may be a SPDT switch. The DP7T switch has one second terminal (contact 1) connected to the first antenna port ANT1, and another second terminal (contact 2) connected to a fixed terminal (i.e., one of the selection terminals of the second switching unit 133) of the SPDT switch. Another fixed terminal of the SPDT switch is directly connected to the second transmitting circuit 120. A movable terminal of the SPDT switch, i.e., the control terminal of the second switching unit 133, is connected to the second antenna port ANT2. The 5G signal transmitting path is mainly composed of the high-frequency transmitting port 4G HB RFIN, the second transmitting circuit 120, the second switching unit 133, and the second antenna port ANT2. Compared with the radio-frequency L-PA Mid device as illustrated in FIG. 2, the 5G signal transmitting path in the radio-frequency L-PA Mid device as illustrated in FIG. 3 can be directly connected to the second antenna port ANT2 through the SPDT switch, without passing through the DP7T switch. Due to the smaller insertion loss of the SPDT switch in the transmitting path than that of the DP7T switch, link loss on the 5G signal transmitting path can be further reduced, and transmitting power of the 5G signal transmitted by the radio-frequency L-PA Mid device can be further improved to satisfy PC2 power level requirements.

In the embodiments of the present disclosure, a type of the switch in the radio-frequency switching circuit 130 is not further defined. The type and number of the radio-frequency switches can be appropriately selected based on the number of frequency bands of transmitting signals.

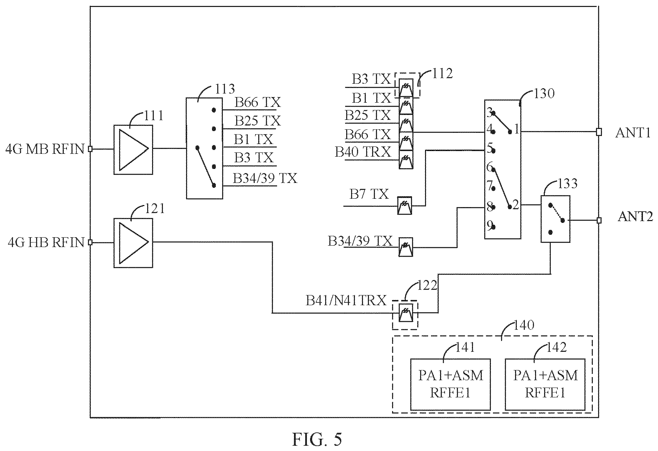

As illustrated in FIG. 4 and FIG. 5, the first transmitting circuit 110 includes a first power amplifier 111, a plurality of first filtering units 112, and a third switching unit 113. An input terminal of the first power amplifier 111 is connected to the medium-frequency transmitting port 4G MB RFIN. The first power amplifier 111 is configured to perform amplification processing on the received 4G signals in the plurality of medium-frequency bands. A first terminal of the third switching unit 113 is connected to an output terminal of the first power amplifier 111. Each of second terminals of the third switching unit 113 is connected to a corresponding one first filtering unit 112. The third switching unit 113 is configured to selectively switch on a transmitting path between the first power amplifier 111 and any one first filtering unit 112. Each first filtering unit 112 is disposed on a transmitting path of the 4G signal and connected to the radio-frequency switching circuit 130, and the first filtering unit 112 is configured to perform filtering processing on the received 4G signal. The plurality of first filtering units 112 can output 4G signals in different frequency bands. The first filtering unit 112 may correspondingly include a filter, which only allows a 4G signal in a predetermined frequency band to transmit. When the 4G signals in the plurality of medium-frequency bands include six different frequency bands, i.e., the B1 frequency band, the B3 frequency band, the B25 frequency band, the B34 frequency band, the B66 frequency band, and the B39 frequency band, six first filtering units 112 (i.e., six filters) can be provided to implement filtering processing on the 4G signals in six medium-frequency bands. The control module 140 can control an on-off state of the third switching unit 113 to allow the 4G signals in the plurality of frequency bands to be transmitted to any one of the first filtering units 112.

In an embodiment, the third switching unit 113 may be a radio-frequency SP5T switch. The radio-frequency SP5T switch has a single terminal connected to the output terminal of the first power amplifier 111, and second terminals each connected to a corresponding first filtering unit 112 or connected to the corresponding multiple first filtering units 112. For example, four second terminals of the radio-frequency SP5T switch are connected to four first filtering units 112 in one-to-one correspondence, for processing four LTE medium-frequency signals including B1, B3, B25, and B6, respectively. The remaining second terminal of the radio-frequency SP5T switch is connected to two filtering circuits for processing four 4G signals including B34 and B39, respectively. After the filtering processing of these five first filtering units 112, the 4G signals in six medium-frequency bands, including the B1 frequency band, the B3 frequency band, the B25 frequency band, the B34 frequency band, the B66 frequency band, and the B39 frequency band, can be outputted to the corresponding radio-frequency switching circuit 130.

The second transmitting circuit 120 includes a second power amplifier 121 and a second filtering unit 122. An input terminal of the second power amplifier 121 is connected to the high-frequency transmitting port 4G HB RFIN. The second power amplifier 121 is configured to perform amplification processing on the received 5G signal. The second filtering unit 122 is connected to an output terminal of the second power amplifier 121 and the radio-frequency switching circuit 130. The second filtering unit 122 is configured to perform filtering processing on the received 5G signal. The second filtering unit 122 may correspondingly include a filter, which merely allows a 5G signal in a predetermined frequency band to transmit, for example, the 5G signal in the N41 frequency band.

In an embodiment, the control module 140 includes a first control unit 141 and a second control unit 142. The radio-frequency switching circuit 130 may be connected to at least one of the first control unit 141 and the second control unit 142. That is, the radio-frequency switching circuit 130 can simultaneously switch on the radio-frequency path where the first transmitting circuit 110 is located and the radio-frequency path where the second transmitting circuit 120 is located under control of the first control unit 141 and/or the second control unit 142. The first control unit 141 may also be connected to the first power amplifier 111 and the third switching unit 113. The first control unit 141 can control the first power amplifier 111 to receive 4G signals in different medium-frequency bands and control a switching state of the third switching unit 113 to control a switch one of a filtering path where any one first filtering unit 112 is located. The second control unit 142 may be connected to the second power amplifier 121 to control the second power amplifier 121 to receive the 5G signal.

In an embodiment, the first control unit 141 and the second control unit 142 may be a Mobile Industry Processor Interface (MIPI)-RF Front End Control Interface (RFFE) control unit, or a RF Front End Control Interface (RFFE) control unit conforming to a control protocol of a RFFE bus. When the first control unit 141 and the second control unit 142 are the MIPI-RFFE control unit or the RFFE control unit, the radio-frequency L-PA Mid device further has an input pin CLK of a clock signal, an input or bidirectional pin SDATAS of a single/bidirectional data signal, a power pin VDD, a reference voltage pin VIO, etc., to control the first power amplifier 111, the second power amplifier 121, the radio-frequency switching circuit 130, and the third switching unit 113.

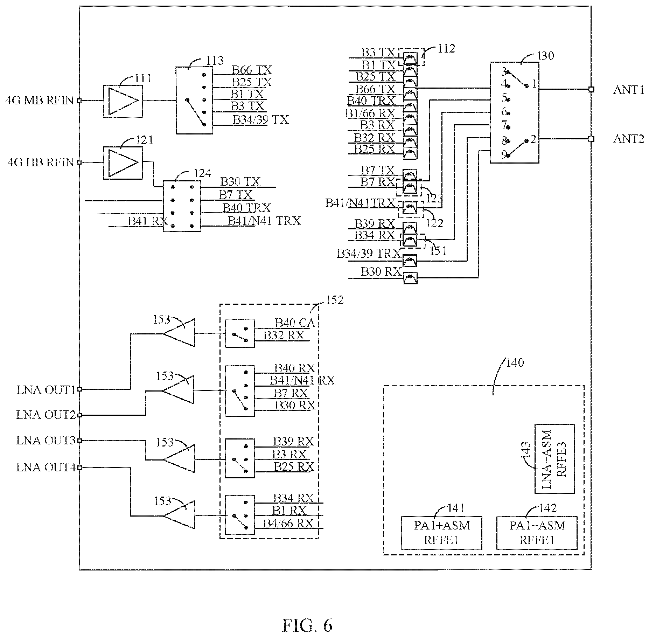

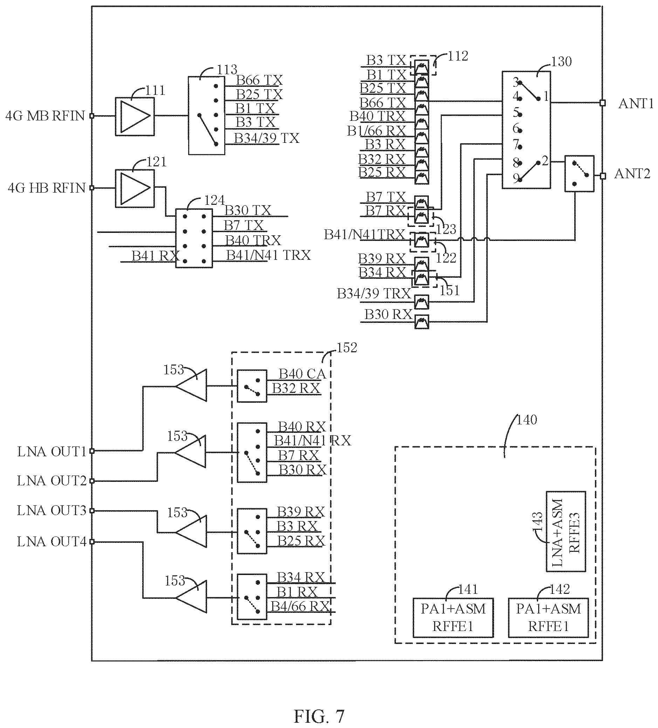

As illustrated in FIG. 6 and FIG. 7, in an embodiment, the high-frequency transmitting port 4G HB RFIN is further configured to receive the 4G signals in the plurality of high-frequency bands, including 4G signals in the B30 frequency band, the B7 frequency band, the B40 frequency band, and the B41 frequency band. The second transmitting circuit 120 further includes a plurality of third filtering units 123 and a fourth switching unit 124. A first terminal of the fourth switching unit 124 is connected to the output terminal of the second power amplifier 121. Each second terminal of the fourth switching unit 124 is connected to a corresponding second filtering unit 122 or one third filtering unit 123, to selectively switch on a transmitting path between the second power amplifier 121 and the second filtering unit 122 or between the second power amplifier 121 and any third filtering unit 123. The third filtering units 123 are each disposed on transmitting paths of the 4G signals in the plurality of high-frequency bands and connected to the radio-frequency switching circuit 130. The third filtering unit 123 is configured to perform filtering processing on the received 4G signal. Frequency bands of 4G signals outputted by the plurality of third filtering units 123 are different from each other.

When the 4G signals in the plurality of high-frequency bands include four different frequency bands, i.e., the B40 frequency band, the B41 frequency band, the B7 frequency band, and the B30 frequency band, and at least three third filtering units 123 (i.e., at least three filters) can be provided to perform filtering processing on the 4G signals in the four high-frequency bands. In an embodiment, the second filtering unit 122 for performing filtering processing on the N41 signal may also perform filtering processing on the B41 signal. That is, three third filtering units 123 may be provided to perform the filtering processing on the 4G signals in the four high-frequency bands, i.e., the B40 frequency band, the B41frequency band, the B7 frequency band, and the B30 frequency band. Optionally, four third filtering units 123 may be provided to perform the filtering processing on the 4G signals in the four high-frequency bands, i.e., the B40 frequency band, the B41 frequency band, the B7 frequency band, and the B30 frequency band.

As an example, a filtering unit for performing filtering processing on two signals, i.e., the N41 signal and the B41 signal, is described below. The fourth switching unit 124 may be the 4P4T switch. One first terminal of the 4P4T switch is connected to the output terminal of the second power amplifier 121, and second terminals of the 4P4T switch are respectively connected to four second filtering units 122 in one-to-one correspondence. That is, four second terminals of the 4P4T switch are connected to four second filtering units 122 in one-to-one correspondence for processing the 4G signals in the four high-frequency bands, i.e., the B40 frequency band, the B41 frequency band, the B7 frequency band, and the B30 frequency band. After the filtering processing of the four second filtering units 122, the 4G signals in the four high-frequency bands, i.e., the B40 frequency band, the B41 frequency band, the B7 frequency band, and the B30 frequency band, can be correspondingly outputted to the radio-frequency switching circuit 130.

It should be noted that in the embodiments of the present disclosure, the filter in the first filtering unit 112, second filtering unit 122, and third filtering unit 123 may be a band-pass filter, a high-pass filter, or the like. It should be noted that, in the embodiments of the present disclosure, a type of the respective filters is not further defined, and a suitable filter may be selected based on a frequency band of a signal to be filtered.

In an embodiment, the radio-frequency L-PAMid device as illustrated in FIG. 6 and FIG. 7, a multi-channel selection switch in the radio-frequency switching circuit 130 connected to the first filtering unit 112, the second filtering unit 122, and the third filtering unit 123 or a same terminal of the first switching unit 131 may be connected to at least one filter. For example, the multi-channel selection switch or the same terminal (contact 4) of the first switching unit 131 may be connected to three filters for performing filtering processing on the B3 frequency band, the B1 frequency band, and the B40 frequency band. In the embodiments of the present disclosure, the number of filters connected to the multi-channel selection switch or the same terminal of the first switching unit 131, and frequency bands of the 4G and 5G signal that are performed by the connected filter for filtering processing are not further defined, and may be set based on a frequency band range of each of the 4G signals and a frequency band range of each of the 5G signals.

As illustrated in FIG. 6 and FIG. 7, in an embodiment, the radio-frequency L-PA Mid device further has at least one receiving port LNA OUT (LNA OUT1, LNA OUT2, LNA OUT3, and LNA OUT4) configured to connect to the radio-frequency transceiver. As an example, the receiving port LNA OUT may be connected to the radio-frequency transceiver and configured to output the processed 4G and 5G signals to the radio-frequency transceiver through the first antenna port ANT1 and the second antenna port ANT2. The radio-frequency L-PAMid device further includes a receiving circuit 150. The radio-frequency L-PAMid device further includes the receiving circuit configured to receive the 5G signal and the 4G signals in the plurality of frequency bands and perform filtering and amplification processing on the received signals. The receiving circuit 150 has an input terminal connected to the radio-frequency switching circuit 130, and an output terminal connected to the at least one of receiving ports.

In an embodiment, as illustrated in FIG. 6 and FIG. 7, the receiving circuit 150 includes a plurality of fourth filtering units 151, a fifth switching unit 152, and a plurality of low noise amplifiers 153. Each fourth filtering unit 151 is configured to perform filtering processing on the received 4G signal and the received 5G signal. Frequency bands of signals outputted by the plurality of fourth filtering units 151 are different from each other. The low-noise amplifier 153 is configured to perform amplification processing on the received 4G signal and the received 5G signal. The radio-frequency switching circuit 130 is connected to the fifth switching unit 152 through any one of the plurality of fourth filtering units 151. The fifth switching unit 152 is connected to the at least one receiving port LNA OUT through any one of the plurality of low noise amplifiers 153. As an example, the first antenna port ANT1, the radio-frequency switching circuit 130, one of the plurality of fourth filtering units 151, the fifth switching unit 152, one of the plurality of the low noise amplifiers 153, and one of the receiving ports LNA OUT may constitute a first receiving path. Based on the constructed first receiving path, the radio-frequency L-PA Mid device may implement a receiving control of a 4G signal in one of the medium-frequency bands. A second receiving path may be constituted by the second antenna port ANT2, the radio-frequency switching circuit 130, another one of the fourth filtering units 151, the fifth switching unit 152, another one of the low noise amplifiers 153, and another one of the receiving ports LNA OUT. Based on the constructed second receiving path, the radio-frequency L-PA Mid device may implement a receiving control of a 4G signal in one of the high-frequency bands or a 5G signal.

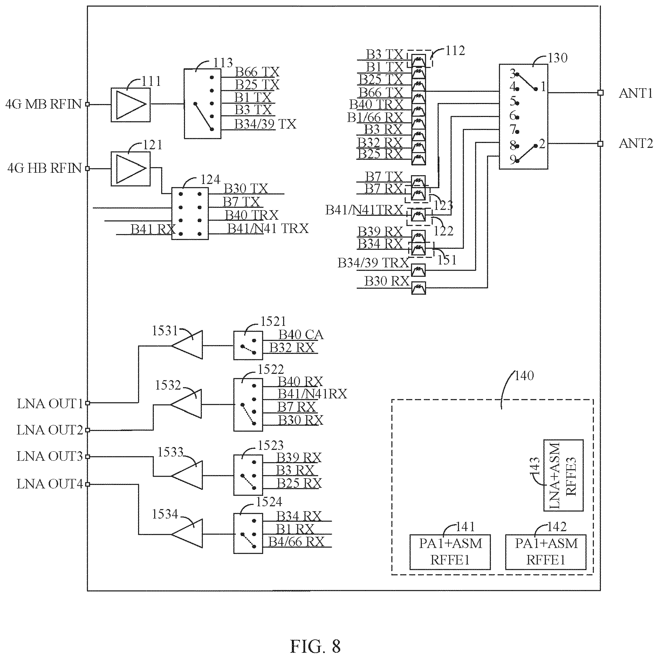

As illustrated in FIG. 8, in an embodiment, the plurality of low noise amplifiers 153 includes a first low noise amplifier 1531, a second low noise amplifier 1532, a third low noise amplifier 1533, and a four low noise amplifier 1534. The fifth switching unit 152 includes four first terminals and a plurality of second terminals. Some of the second terminals of the fifth switching unit 152 are connected to the second transmitting circuit 120. Some of the plurality of second terminals of the fifth switching unit 152 are connected to the plurality of fourth filtering units 151 in one-to-one correspondence. Each four first terminal of the fifth switching unit 152 is connected to an input terminal of a corresponding four low noise amplifiers 153. The output terminal of each four low noise amplifier 153 is connected to a corresponding receiving port LNA OUT.

In an embodiment, the fifth switching unit 152 may include four switches, for example, including a first SP3T switch 1521, an SP4T switch 1522, a second SP3T switch 1523, and a third SP3T switch 1524. A single terminal of the first SP3T switch 1521 is connected to an input terminal of the first low noise amplifier 1531, and a selection terminal of the first SP3T switch 1521 may be connected to at least one corresponding fourth filtering unit 1 51. A single terminal of the SP4T switch 1522 is connected to an input terminal of the second low noise amplifier 1532. Two selection terminals of the SP4T switch 1522 may be connected to the corresponding fourth switching unit 124 in the second transmitting circuit 120, and another two selection terminals of the SP4T switch 1522 are directly connected to two fourth filtering units 151. A single terminal of the second SP3T switch 1523 is connected to an input terminal of the third low noise amplifier 1533, and each selection terminal of the second SP3T switch 1523 may be connected to a corresponding fourth filtering unit 151. A single terminal of the third SP3T switch 1524 is connected to an input terminal of the fourth low noise amplifier 1534, and each selection terminal of the third SP3T switch 1524 may be connected to a corresponding fourth filtering unit 151.

The fourth filtering unit 151 connected to three selection terminals of the first SP3T switch 1521 includes a filter for performing filtering processing on the medium-frequency signal, i.e., B32 signal. The plurality of fourth filtering units 151 directly or indirectly connected to four selection terminals of the SP4T switch 1522 includes a filter for performing filtering processing on four 4G signals (or a 5G signal), i.e., B40, B41 (N41), B7, and B30 signals. The plurality of fourth filtering units 151 connected to three selection terminals of the second SP3T switch 1523 may include a filter for performing filtering processing on three 4G signals, i.e., B39, B3, and B25 signals, respectively. The plurality of fourth filtering units 151 connected to the three selection terminals of the second SP3T switch 1523 may include a filter for performing filtering processing on four 4G signals, i.e., B34, B1, B4, and B66 signals, respectively. The fourth filtering units 151 for performing filtering processing on two 4G signals, i.e., B1 and B66 may be a shared fourth filtering unit.

It should be noted that in the embodiments of the present disclosure, the filters in the receiving path and transmitting path for some 4G signals may be shared. For example, the third filtering unit 123 and the fourth filtering unit 151 for performing filtering processing on the B40 and B41 signals may be the same shared filtering unit. The first filtering unit 112 and the fourth filtering unit 151 for performing filtering processing on the B34 and B39 signals may the same shared filtering unit. In addition, the plurality of fourth filtering units 151 connected to the same radio-frequency switch is configured to perform the filtering processing on the 4G signals in the frequency bands that are close to each other.

When the 4G signal is a high-frequency signal operating in a TDD system such as a B41 signal or a B40 signal, a second receiving path for this 4G signal is constituted by the second antenna port ANT2, the radio-frequency switching circuit 130, the fourth filtering unit 151, the fourth switching unit 124, the SP4T switch 1522, the low noise amplifier 153, and the receiving port LNA OUT. When the 4G signal is a 4G signal operating in an FDD system such as a B7 signal, the second receiving path for this 4G signal may be constituted by the second antenna port ANT2, the radio-frequency switching circuit 130, the fourth filtering unit 151, the SP4T switch 1522, the low noise amplifier 153, and the receiving port LNA OUT.

Based on the radio-frequency L-PA Mid device as illustrated in FIG. 8, a transceiving control working principle of the N41 frequency band is described below.

Transmitting control: high-frequency transmitting port 4G HB RFIN → fourth switching unit 124→ N41 TRX path→ second filtering unit 122→ multi-channel selection switch→ second antenna port ANT2.

Receiving control: second antenna port ANT2→ multi-channel selection switch-second filtering unit 122→ N41 TRX path→ fourth switching unit 124→ SP4T switch 1522 → second low noise amplifier 1532→ receiving port LNA OUT2.

A receiving path of the 4G signal in the medium-frequency band in the radio-frequency L-PA Mid device may be based on the first receiving path described above, and a receiving path of the 4G signal in the high-frequency band may be based on the second receiving path described above. A calculation formula of a cascade noise coefficient is as shown in Formula 1:

$$NF=N1+(N2-1)/G1+(N3-1)/G1*G2+(N4-1)/G1*G2*G3+\cdots \qquad \text{(Formula 1)}$$

where N1 to N4 represent noise coefficients of a first level to a fourth level, respectively; G1 to G3 represent gains of a first level to a third level. A final cascade noise coefficient of the whole receiving path can be calculated based on the Formula (1). Sensitivity is a minimum input signal level that may be received by the communication apparatus when the communication apparatus satisfies a certain Bit Error Ratio (BER) performance.

The first receiving path and the second receiving path are formed in the receiving circuit 150 in the radio-frequency L-PAMid device, thereby achieving the transceiving control of the 4G signals in the medium- and high-frequency bands of the plurality of frequency bands. An external switching circuit can be omitted to reduce link loss on the receiving path and thus reduce the cascade noise coefficient of any one of receiving paths, thereby improving sensitivity of the radio-frequency L-PAMid device.

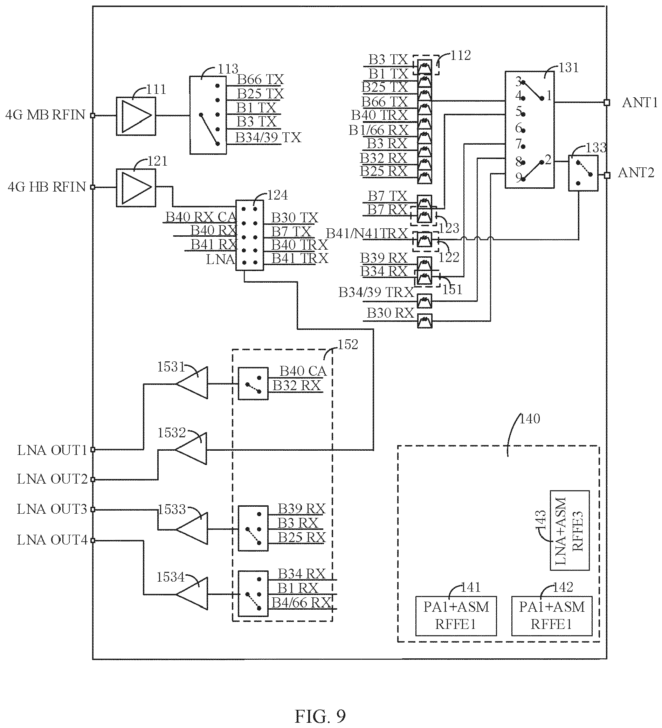

As illustrated in FIG. 9, in an embodiment, the plurality of low noise amplifiers 153 includes a first low noise amplifier 1531, a second low noise amplifier 1532, a third low noise amplifier 1533, and a fourth low noise amplifier 1534. The fifth switching unit 152 includes three first terminals and a plurality of second terminals. The plurality of second terminals is connected to the plurality of fourth filtering units 151 in one-to-one correspondence. An input terminal of the first low noise amplifier 1531 is connected to the second transmitting circuit 120. An input terminal of the second low noise amplifier 1532, an input terminal of the third low noise amplifier 1533, and an input terminal of the fourth low noise amplifier 1534 are each connected to one corresponding first terminal of the fifth switching unit 152. An output terminal of the first low noise amplifier 1531, an output terminal of the second low noise amplifier 1532, an output terminal of the third low noise amplifier 1533, and an output terminal of the fourth low noise amplifier 1534 are each connected to one corresponding receiving port LNA OUT.

Based on the radio-frequency L-PA Mid device as illustrated in FIG. 9, the transceiving control working principle of the N41 frequency band is described below.

Transmitting control: high-frequency transmitting port 4G HB RFIN of radio-frequency L-PAMid device→ fourth switching unit 124→ N41 TRX path→ second filtering unit 122→ second switching unit 133→ second antenna port ANT2.

Receiving control: second antenna port ANT2 → second switching unit 133→ second filtering unit 122→ N41 TRX path→ fourth switching unit 124→ second low noise amplifier 1532→ receiving port LNA OUT2.

Compared with the radio-frequency L-PA Mid device as illustrated in FIG. 8, in the radio-frequency L-PA Mid device as illustrated in FIG. 9, the fourth switching unit 124 is a radio-frequency 5P5T switch. The radio-frequency 5P5T switch includes five first terminals and five second terminals. One of the five first terminals is connected to the output terminal of the second power amplifier 121, and another other of the first terminals is directly connected to one of the input terminals of the low noise amplifier 153, so that the SP4T switch 1522 in FIG. 8 can be omitted. When the 4G signal is a 4G signal operating in the TDD system, such as the B41 signal or the B40 signal, the second receiving path of the 4G signal is constituted by the second antenna port ANT2, the radio-frequency switching circuit 130, the fourth filtering unit 151, the fourth switching unit 124, the low noise amplifier 153, and the receiving port LNA OUT. When the 4G signal is a 4G signal operating in the FDD system such as the B7 signal, the second receiving path of the 4G signal may be constituted by the second antenna port ANT2, the radio-frequency switching circuit 130, the fourth filtering unit 151, the fifth switching unit 152, the low noise amplifier 153, and the receiving port LNA OUT.

Based on the radio-frequency L-PAMid device as illustrated in FIG. 9, by improving the fourth switching unit 124, the second receiving path thereof is not required to pass through the SP4T switch 1522. In this way, the link loss on the second receiving path can be further reduced and thus the cascade noise coefficient of the receiving path of 4G signals in the high-frequency bands, thereby improving the sensitivity of the radio-frequency L-PA Mid device.

As illustrated in FIG. 8 and FIG. 9, in an embodiment, the control module 140 further includes a third control unit 143. The third control unit 143 is configured to be connected to each low noise amplifier 153 and each fifth switching unit 152. The third control unit 143 is configured to control the receiving paths of the 4G signals in respective frequency bands and the 5G signal. The third control unit 143 is the same as the first control unit 141 or the second control unit 142, and details thereof will be omitted herein.

Further, the third control unit 143 is connected to each low noise amplifier 153 and is configured to adjust a gain coefficient of each low noise amplifier 153 to reduce a cascade noise coefficient of a 4G signal receiving path and a cascade noise coefficient of a 5G signal receiving path. In this way, the cascade noise coefficients of any receiving paths can be reduced, and thus the sensitivity of the radio-frequency L-PAMid device can be improved.

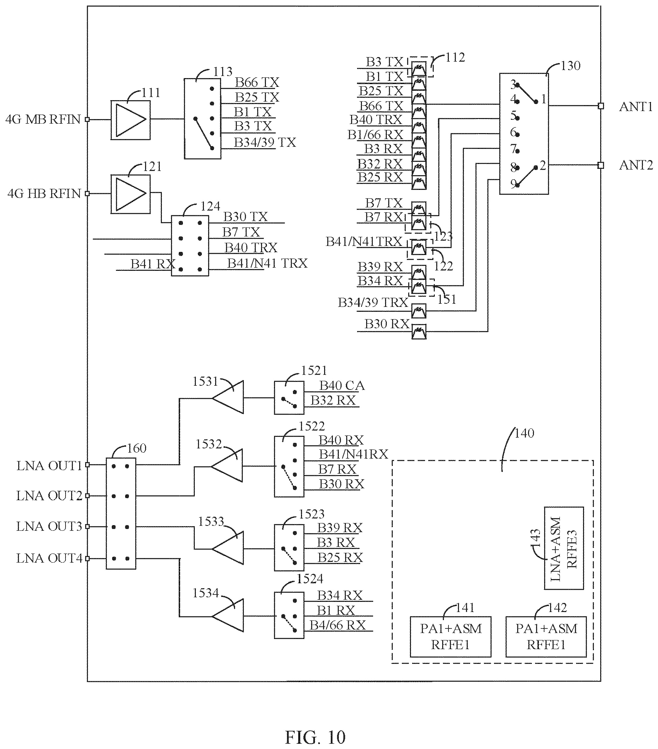

As illustrated in FIG. 10, in an embodiment, the radio-frequency L-PA Mid device further includes a sixth switching unit 160. The sixth switching unit 160 has a plurality of first terminals and a plurality of second terminals. Each first terminal of the sixth switching unit 160 is connected to one corresponding receiving port LNA OUT, and each second terminal is connected to an output terminal of one corresponding low noise amplifier 153. For example, the sixth switching unit 160 may be the radio-frequency 4P4T switch.

By providing the sixth switching unit 160 in the radio-frequency L-PAMid device, a path between any one of the first low noise amplifiers 1531 and any one of the receiving ports LNA OUT may be selectively switched on, thereby improving the flexibility of the output 4G signal.

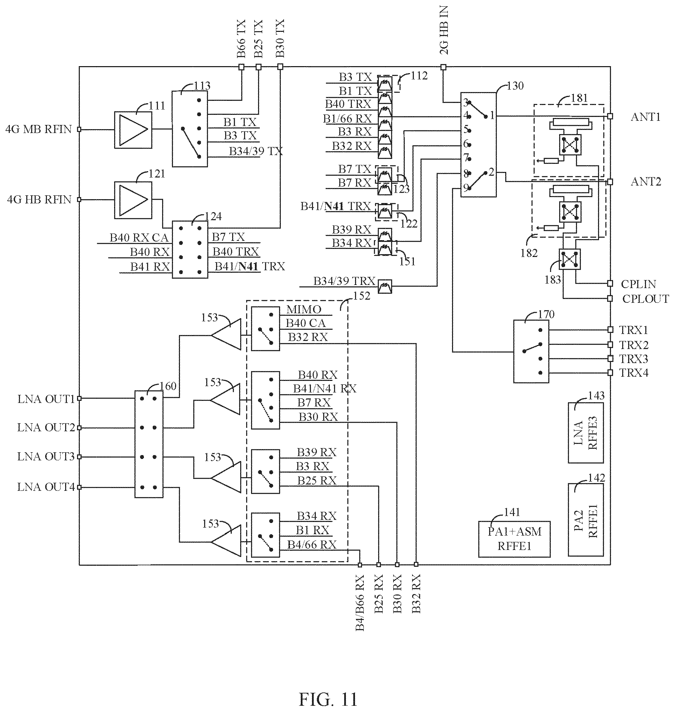

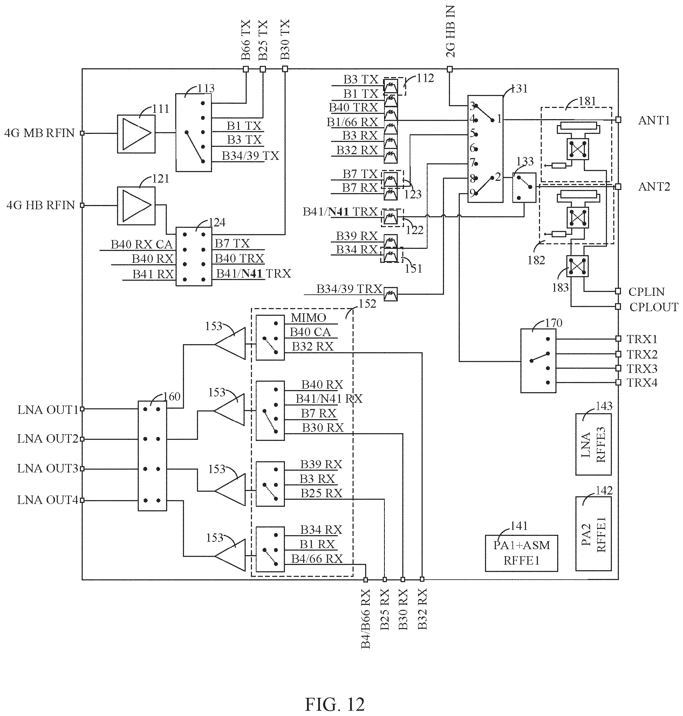

As illustrated in FIG. 11 and FIG. 12, in an embodiment, the radio-frequency L-PA Mid device further has a plurality of auxiliary transmitting ports TX, a plurality of auxiliary transceiving ports TRX, and a plurality of auxiliary receiving ports RX, which are configured to connect to an external switching circuit. The radio-frequency L-PA Mid device further includes a seventh switching unit 170. The plurality of auxiliary transmitting ports TX is connected to the first transmitting circuit 110 and the second transmitting circuit 120. The plurality of auxiliary transceiving ports TRX is connected to the radio-frequency switching circuit 130 through the seventh switching unit 170. The plurality of auxiliary receiving ports RX is connected to the receiving circuit 150. In an embodiment, the plurality of auxiliary transmitting ports TX is configured to transmit the 4G signal in the B66 frequency band, the B25 frequency band, or the B30 frequency band. That is, the transceiving paths of the 4G signals in the B66 frequency band, the 4G signal in the B25 frequency band, and the 4G signal in the B30 frequency band include the external switching circuit. As an example, the transceiving control of the B66 signal is described. A transmitting path of the B66 signal is as follow: the medium-frequency transmitting port 4G MB RFIN→ the first power amplifier 111→ the third switching unit 113→ the auxiliary transmitting port TXB66 TX→ the switching circuit (not shown)→ the auxiliary transceiving port TRXB66 TRX→ the seventh switching unit 170→ the radio-frequency switching circuit 130→ the first antenna port ANT1. A receiving path of the B66 signal is as follow: the first antenna port ANT1→ the seventh switching unit 170→ the auxiliary transceiving port TRXB66 TRX→ the switching circuit→ the auxiliary receiving port RXB66 RX→ the second SP3T switch 1523→ the low noise amplifier 153→ the sixth switching unit 160→ the receiving port LNA OUT. Compared with the radio-frequency L-PA Mid device as illustrated in FIG. 11 and FIG. 12, the transceiving paths of all 4G signals may be integrated in the radio-frequency L-PA Mid device as illustrated in FIG. 2 to FIG. 10, and thus link loss on the receiving path and the transmitting path may be reduced.

As illustrated in FIG. 11 and FIG. 12, in an embodiment, the radio-frequency L-PA Mid device further has a coupling output port CLPOUT. The radio-frequency L-PAMid device further includes a first coupling unit 181, a second coupling unit 182, and a coupling switch 183. The first coupling unit 181 is disposed on a transmitting path between the radio-frequency switching circuit 130 and the first antenna port ANT1. The first coupling unit is configured to couple a signal on the transmitting path (the 4G signal in the medium-frequency band) to output a first coupling signal through a coupling terminal of the first coupling unit 181. The first coupling signal may be configured to measure a forward coupling power and a reverse coupling power of the 4G signal in the medium-frequency band. The second coupling unit 182 is disposed on a transmitting path between the radio-frequency switching circuit 130 and the second antenna port ANT2. The second coupling unit 182 is configured to couple a signal on the transmitting path (the 4G signal in the high-frequency band) to output a second coupling signal through a coupling terminal of the second coupling unit 182. The second coupling signal may be configured to measure a forward coupling power and a reverse coupling power of the 4G signal in the high-frequency band.

The first coupling unit 181 and the second coupling unit 182 have the same structure. The first coupling unit 181 is used herein as an example for description. For example, the first coupling unit 181 includes an input terminal, an output terminal, and a coupling terminal. The input terminal of the first coupling unit 181 is connected to the radio-frequency switching circuit 130. The output terminal of the first coupling unit 181 is connected to the first antenna port ANT1. The coupling terminal is configured to couple the 4G signal received by the input terminal and output the first coupling signal. The first coupling signal includes a first forward coupling signal and a first reverse coupling signal. Forward power information of the 4G signal may be detected based on the first forward coupling signal outputted by the coupling terminal. Reverse power information of the 4G signal may be correspondingly detected based on the first reverse coupling signal outputted by the coupling terminal. Such a detection mode is defined as a reverse power detection mode.

The coupling switch 183 is connected to the coupling terminal of the first coupling unit 181, the coupling terminal of the second coupling unit 182, and the coupling output port CLPOUT. The coupling switch 183 is configured to selectively output the first coupling signal or the second coupling signal to the coupling output port. That is, the coupling switch 183 is configured to switch between a detection mode of the first coupling signal and a detection mode of the second coupling signal.

In the present embodiment, the radio-frequency L-PA Mid device has only one coupling output port CLPOUT disposed thereon, and has a reduced complexity of radio-frequency wirings in the radio-frequency L-PA Mid device, while the isolation performance of the respective wirings in the radio-frequency L-PA Mid device is improved.

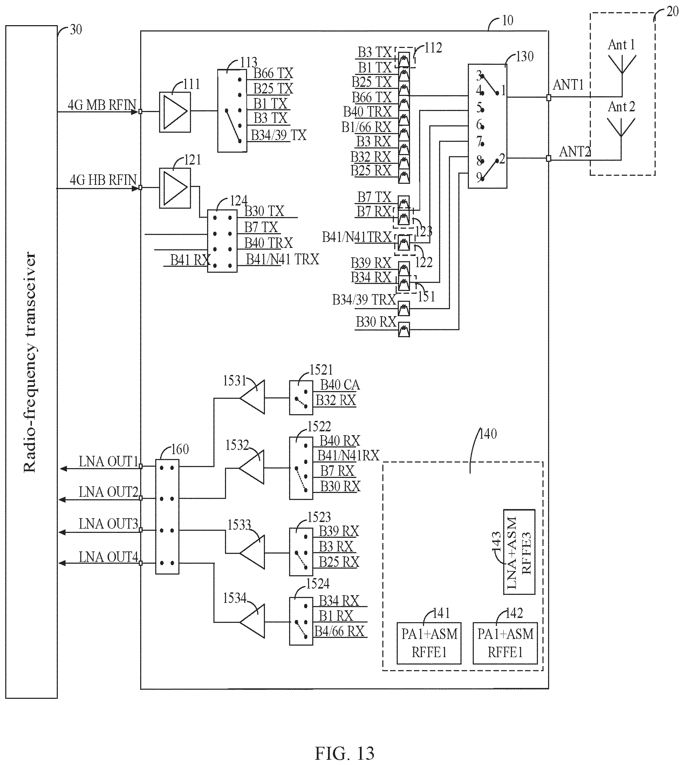

As illustrated in FIG. 13, the embodiments of the present disclosure further provide a radio-frequency transceiving system. In an embodiment, the radio-frequency transceiving system includes the above-mentioned radio-frequency L-PA Mid device 10, an antenna assembly 20, and a radio-frequency transceiver 30. The antenna assembly 20 includes a first antenna Ant1 and a second antenna Ant2. The first antenna Ant1 is connected to the first antenna port ANT1 of the radio-frequency L-PA Mid device 10 and configured to transceive a radio-frequency signal. The second antenna Ant2 is connected to the second antenna port ANT2 of the radio-frequency L-PA Mid device 10 and configured to transceive the radio-frequency signal. The radio-frequency transceiver 30 is connected to the high-frequency transmitting port 4G HB RFIN, medium-frequency transmitting port 4G MB RFIN, and receiving port LNA OUT of the radio-frequency L-PAMid device 10.

In an embodiment, the first antenna Ant1 and the second antenna Ant2 may be of any suitable type of antenna. For example, the first antenna Ant1 and the second antenna Ant2 may include an antenna having a resonant element and formed by at least one of the following antenna structures: an array antenna structure, a loop antenna structure, a patch antenna structure, a slot antenna structure, a spiral antenna structure, a strip antenna, a monopole antenna, a dipole antenna, or the like. Different types of antennas can be used for combinations of frequency bands of different radio-frequency signals. In the embodiments of the present disclosure, the type of the first antenna Ant1 and the second antenna Ant2 is not further defined.

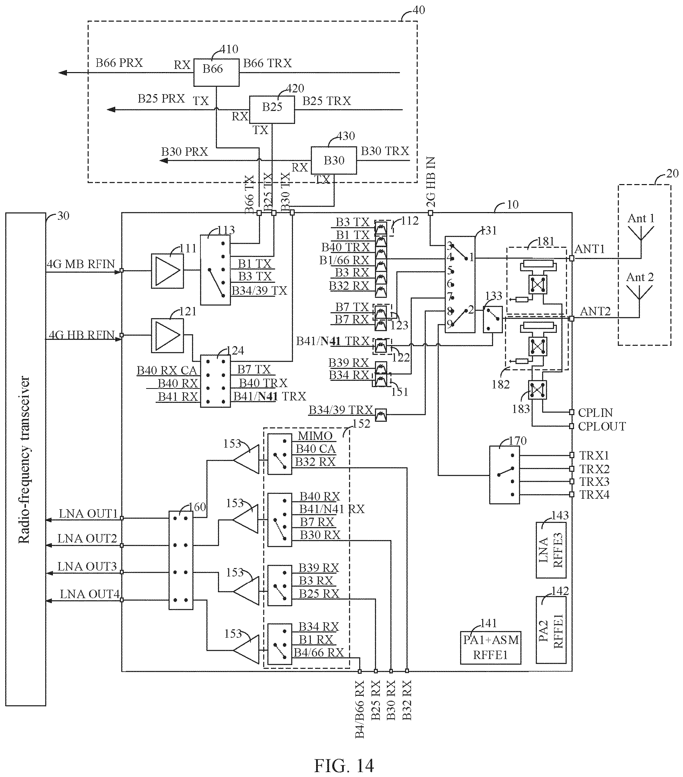

As illustrated in FIG. 14, in an embodiment, the radio-frequency transceiving system includes the radio-frequency L-PA Mid device 10 as illustrated in FIG. 12. The radio-frequency transceiving system further includes a switching circuit 30. The switching circuit 30 is connected to the plurality of auxiliary transmitting ports RX, the plurality of auxiliary transceiving ports TX, and the plurality of auxiliary receiving ports TRX in the radio-frequency L-PAMid device 10. As an example, the switching circuit 40 may include a first switching unit 410, a second switching unit 420, and a third switching unit 430. The first switching unit 410 is configured to switch between the transmitting path and receiving path of the 4G signal in the B66 frequency band. The second switching unit 420 is configured to switch between the transmitting path and receiving path of the 4G signal in the B25 frequency band. The third switching unit 430 is configured to switch between the transmitting path and receiving path of the 4G signal in the B30 frequency band.

Based on the radio-frequency transceiving system as illustrated in FIG. 13 and FIG. 14, the first transmitting circuit 110 and the second transmitting circuit 120 may simultaneously process the received signal, and switch on the radio-frequency path where the first transmitting circuit 110 is located and the radio-frequency path where the second transmitting circuit 120 is located, thereby implementing the simultaneous transmission processing on the 4G signal in any medium-frequency band and the 5G signal. That is, the dual connectivity of the 5G frequency band and the 4G signal in the medium-frequency band can be achieved. In this way, the 5G signal can be amplified without requiring an additional add-on power amplifier module supporting the 5G frequency band, thereby greatly increasing an integration level of the device and reducing an occupied space of the device and reducing costs of the device.

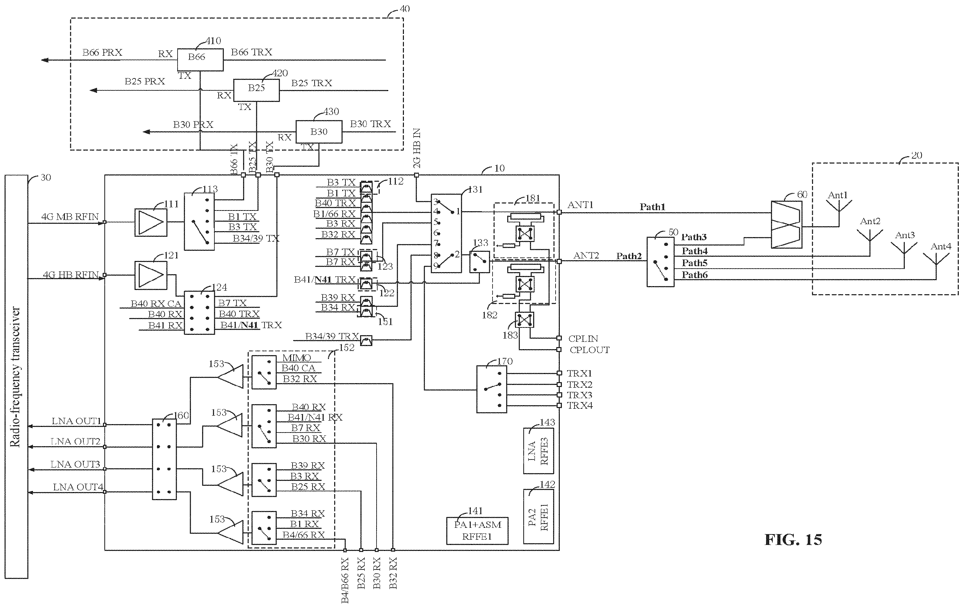

As illustrated in FIG. 15, in an embodiment, the antenna assembly 20 includes a first antenna Ant1, a second antenna Ant2, a third antenna Ant3, and a fourth antenna Ant4. The radio-frequency transceiving system further includes a first radio-frequency switch 50 and a first combiner 60. The first radio-frequency switch 50 includes a first terminal and a plurality of second terminals. The first terminal of the first radio-frequency switch 50 is connected to one antenna port ANT (for example, the second antenna port ANT2) of the radio-frequency L-PA Mid device 10. The first combiner 60 has a first terminal connected to another antenna port ANT (for example, the first antenna port AnTI) of the radio-frequency L-PAMid device 10 and the first radio-frequency switch 50, and a second terminal connected to the first antenna Ant1. The second antenna Ant2 is connected to one second terminal of the first radio-frequency switch 50. The third antenna Ant3 is connected to another second terminal of the first radio-frequency switch 50. The fourth antenna Ant4 is connected to yet another second terminal of the first radio-frequency switch 50.

In an embodiment, the first radio-frequency switch 50 may be a radio-frequency Single-Pole Four-Throw (SP4T) switch. A single terminal (i.e., a first terminal) of the radio-frequency SP4T switch is connected to the second antenna port ANT2 of the radio-frequency L-PA Mid device 10. A selection terminal of the radio-frequency SP4T switch is connected to the first antenna Ant1 through the first combiner 60. Another selection terminal of the radio-frequency SP4T switch is connected to the second antenna Ant2. Yet another selection terminal of the radio-frequency SP4T switch is connected to the third antenna Ant3. Still yet another selection terminal of the radio-frequency SP4T switch is connected to the fourth antenna Ant4.

It should be noted that the third antenna Ant3 and the fourth antenna Ant4 may be the same as the first antenna Ant1 or the second antenna Ant2. A type of the third antenna Ant3 and a type of the fourth antenna Ant4 are not further defined herein.

The radio-frequency transceiving system as illustrated in FIG. 15 can support a 1T4R Sounding Reference Signal (SRS) function in the NSA mode and an SRS function in the Standalone Access mode. The communication apparatus provides feedback of channel information in two different modes, i.e., Precoding Matrix Indicator (PMI) and Sounding Reference Signal (SRS). In view of standard definition, PMI is a mandatory function for all 5G communication apparatuses, while SRS is an optional function. PMI is a mode that the base station estimates channel information and resource requirements in accordance with a predetermined mechanism based on a measurement of a terminal and various quantization algorithms, and reports the channel information and the resource requirements to the base station. SRS is a mode that the terminal directly reports the channel information to the base station by means of channel reciprocity. It is obvious that SRS is more accurate than PMI. The base station can detect a position of the terminal and a channel quality by transmitting SRS information by means of the communication apparatus. SRS antenna polling transmission is explained in detail below.

1T1R: feeding back information to the base station only at the first antenna Ant1, not supporting the SRS polling transmission.

1T4R: transmitting SRS information at the first antenna Ant1 to a fourth antenna Ant4 in turn, where only one antenna is selected for transmission each time. Currently, Non-Standalone (NSA) networks adopt this mode.

2T4R: transmitting SRS information at the first antenna Ant1 to the fourth antenna Ant4 in turn, where two antennas are selected for transmission each time. Currently, Standalone (SA) networks adopt this mode.

In the SRS mode, with an increase in the number of antennas capable of participating in the transmission of a reference signal, the channel estimation is more accurate, and thus the corresponding rate can be higher. With the same number of antennas, the SA mode can complete the channel estimation faster than the NSA mode, thereby increasing a network channel estimation speed.

In the embodiments of the present disclosure, for the 5G signal in the N41 frequency band, only one transmission path (1TX) is provided for the N41 frequency band. In the NSA mode, the B3 frequency band and the N41 frequency band are used as the ENDC combination. With reference to the radio-frequency transceiving system as illustrated in FIG. 15, an SRS working principle of an N41 frequency band NSA system is briefly described below.

SRS transmitting control: the radio-frequency transceiver 30→ the high-frequency transmitting port 4G HB RFIN of the radio-frequency L-PA Mid device 10→ the fourth switching unit 124→ the N41 TRX path→ the second filtering unit 122→ the multi-channel selection switch→ the second antenna port ANT2→ path 2→ the first radio-frequency switch 50→ path 3→ the first antenna Ant1, for implementing SRS function; further, the first radio-frequency switch 50→ path 4→ the second antenna Ant2, for implementing SRS function; further, the first radio-frequency switch 50 → path 5 → the third antenna Ant3, for implementing SRS function; and further, the first radio-frequency switch 50→ path 6→ the fourth antenna Ant4, for implementing SRS function.

The SRS working principle of the N41 SA system is similar as that of NSA system, which is not described in detail herein. The SRS paths in NSA and SA systems are illustrated in Table 2.

[Table 2] Detailed path configurations for SRS

|  | N41 NSA | N41 SA |
|---|---|---|
| Channel 0 | Path 2->Path 3 | Path 2->Path 3 |
| Channel 1 | Path 2->Path 4 | Path 2->Path 4 |
| Channel 2 | Path 2->Path 5 | Path 2->Path 5 |
| Channel 3 | Path 2->Path 6 | Path 2->Path 6 |

In Table 2, Channel 0, Channel 1, Channel 2, and Channel 3 are transmitting paths for polling transmission of the antennas.

In the above-mentioned radio-frequency transceiving system, by providing the antenna assembly 20, the radio-frequency L-PA Mid device 10, the radio-frequency transceiver 30, the first radio-frequency switch 50, and the first combiner 60, only one radio-frequency L-PA Mid device 10 is provided to implement the simultaneous transmission processing on the 4G signal in any medium-frequency band and the 5G signal. That is, the dual connectivity of 5G frequency band and 4G signal in the medium-frequency band can be achieved, and the 5G signal can be amplified without requiring an additional add-on power amplifier module supporting the 5G frequency band. Therefore, the 1T4R SRS function in the NSA mode and the 1T4R SRS function in the Standalone Access mode. Based on the radio-frequency transceiving system, the costs can be reduced, the integration level of the device can be increased, and a substrate area occupied by respective devices in the radio-frequency system can be reduced.

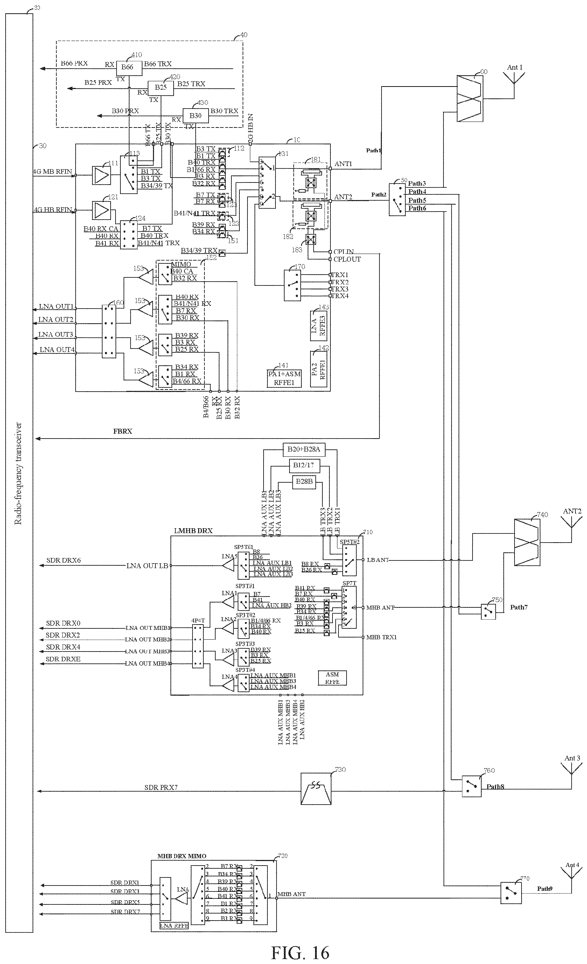

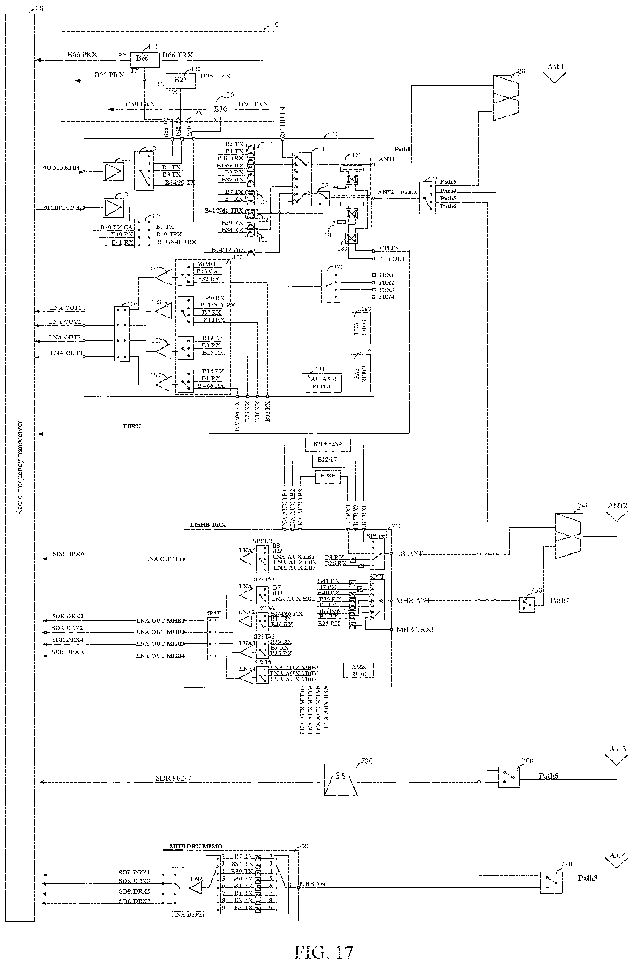

As illustrated in FIG. 16 and FIG. 17, in an embodiment, the radio-frequency transceiving system further includes a first diversity receiving module 710, a second diversity receiving module 720, a filtering module 730, a second combiner 740, a second radio-frequency switch 750, a third radio-frequency switch 760, and a fourth radio-frequency switch 770. The first diversity receiving module 710 is configured to support diversity receiving control of the 4G signals in the plurality of frequency bands and the 5G signal. The second diversity receiving module 720 is configured to support diversity receiving control of the 4G signals in the plurality of frequency bands. The filtering module 730 is connected to the radio-frequency transceiver 30 and configured to perform filtering processing on received 5G signal. The second combiner 740 has a first terminal connected to one antenna port ANT of the first diversity receiving module 710 and a second terminal connected to the second antenna Ant2. One selection terminal of the second radio-frequency switch 750 is connected to another antenna port ANT of the first diversity receiving module 710. Another selection terminal of the second radio-frequency switch 750 is connected to the first radio-frequency switch 50. A control terminal of the second radio-frequency switch 750 is connected to the first terminal of the second combiner 740. The third radio-frequency switch 760 has one of selection terminals connected to the filtering module 730, another one of the selection terminals connected to the first radio-frequency switch 50, and a control terminal connected to the third antenna Ant3. One selection terminal of the fourth radio-frequency switch 770 is connected to the second diversity receiving module 720. Another selection terminal of the fourth radio-frequency switch 770 is connected to the first radio-frequency switch 50. A control terminal of the fourth radio-frequency switch 770 is connected to the fourth antenna Ant4.

In the embodiments of the present disclosure, for the 5G signal in the N41 frequency band, only one transmission path (1TX) is provided for the N41 frequency band. In the NSA mode, the B3 frequency band and the N41 frequency band are used as the ENDC combination. Based on the radio-frequency transceiving system as illustrated in FIG. 16, the SRS working principle of the N41 frequency band NSA system is briefly described below.

SRS transmitting control: the radio-frequency transceiver 30→ the high-frequency transmitting port 4G HB RFIN of the radio-frequency L-PA Mid device 10→ the fourth switching unit 124→ the N41 TRX path→ the second filtering unit 122→ the second switching unit 133→ the second antenna port ANT2→ path 2→ the first radio-frequency switch 50→ path 3→ the first antenna Ant1, for implementing the SRS function; further, the first radio-frequency switch 50→ path 4→ the second radio-frequency switch 750→ path 7 → the second antenna Ant2, for implementing the SRS function; further, the first radio-frequency switch 50→ path 5→ the third radio-frequency switch 760→ path 8→ the third antenna Ant3, for implementing the SRS function; and further, the first radio-frequency switch 50→ path 6→ the fourth radio-frequency switch 770→ path 9→ the fourth antenna Ant4, for implementing the SRS function.

The SRS working principles of the N41 SA system are similar as that of the NSA system, which are not described in detail herein. The SRS paths in NSA and SA systems are illustrated in Table 3.

[Table 3] Detailed path configurations for SRS

|  | N41 NSA | N41 SA |
|---|---|---|
| Channel 0 | Path 2->Path 3 | Path 2->Path 3 |
| Channel 1 | Path 2->Path 4->Path 7 | Path 2->Path 4->Path 7 |
| Channel 2 | Path 2->Path 5->Path 8 | Path 2->Path 5→Path 8 |
| Channel 3 | Path 2->Path 6->Path 9 | Path 2->Path 6->Path 9 |

In Table 3, Channel 0, Channel 1, Channel 2, and Channel 3 are transmitting paths for polling transmission of the antennas.

Based on the radio-frequency transceiving system as illustrated in FIG. 17, the transceiving control working principle of the N41 frequency band is briefly described below.

Transmitting path control: the radio-frequency transceiver 30→ the high-frequency transmitting port 4G HB RFIN of the radio-frequency L-PAMid device 10→ the second power amplifier 121→ the fourth switching unit 124→ the N41 TRX path→ the second filtering unit 122→ the second switching unit 133→ the second antenna port ANT2→ Path 2→ the first radio-frequency switch 50→ Path 3→ the first combiner 60→ the first antenna Ant1.

Receiving path control: the first antenna Ant1→ the first combiner 60→ Path 3→ the first radio-frequency switch 50→ Path2→ the second antenna port ANT2→ the second switching unit 133 → the second filtering unit 122→ the N41 TRX path→ the fourth switching unit 124→ the second low noise amplifier 1532→ the sixth switching unit 160→ the receiving port LNA OUT.

Based on the radio-frequency transceiving system as illustrated in FIG. 16 and FIG. 17, the radio-frequency transceiving system can support the 1T4R SRS function in the NSA mode and the 1T4R SRS function in the Standalone Access mode be supported, while the radio-frequency transceiving system can also realize a MIMO function of the 5G NR N41 frequency band. In this way, an integration level of the radio-frequency system can be increased, thereby reducing complexity of layout wiring of a PCB board of the radio-frequency system, the costs, and the substrate area occupied by the respective devices in the radio-frequency system. Compared with the radio-frequency L-PAMid device 10 as illustrated in FIG. 16, the 5G signal transmitting path in the radio-frequency transceiving system illustrated in FIG. 17 can be directly connected to the second antenna port ANT2 through the second switching unit 133 (the SPDT switch), without passing through the multi-channel selection switch (the DP7T switch). Insertion loss of a built-in DP7T switch is very high, and the specific parameters are illustrated in Table 4. Insertion loss of a built-in SPDT switch is illustrated in Table 5.

[Table 4] Insertion loss parameters for the DP7T switch

| Frequency band | 1.0 GHz | 2.0 GHz | 2.7 GHz |
|---|---|---|---|
| Insertion loss (dB) | 1 dB | 1.5 dB | 1.8 dB |

[Table 5] Insertion loss parameters for SPDT switch

| Frequency band | Insertion loss |
|---|---|
| 100~1000 | 0.3 |
| 1000~1600 | 0.4 |
| 1600~2200 | 0.45 |
| 2200~2700 | 0.6 |

Since the insertion loss of the second switching unit 133 (SPDT switch) in the transmitting path is smaller than insertion loss of the multi-channel selection switch (the DP7T switch), insertion loss on the transmitting path thereof is reduced by 1.8-0.6=1.2 dB. Further, an output power of the second antenna Ant2 may be increased to reach 26.6 dBm, satisfying the PC2 power level requirements, i.e., satisfying the related requirements of the 3rd Generation Partnership Project (3GPP) protocol.

According to the embodiments of the present disclosure, a communication apparatus is further provided. The communication apparatus has the radio-frequency transceiving system in any one of the above-mentioned embodiments disposed thereon. By providing the radio-frequency transceiving system on the communication apparatus, only one radio-frequency L-PA Mid device is provided to implement the simultaneous transmission processing on the 4G and 5G signal in any of the medium-frequency bands. That is, dual connectivity of 5G frequency band and 4G signal in the medium-frequency band can be achieved, and the 5G signal can be amplified without requiring an additional add-on power amplifier module supporting the 5G frequency band, thereby supporting the 1T4R SRS function in the NSA mode and the 1T4R SRS function in the Standalone Access mode. With the radio-frequency transceiving system, the costs can be reduced, the integration level of the device can be increased, and the substrate area occupied by each device in the radio-frequency system can be reduced.

While several embodiments of the present disclosure have been described above in a specific and detailed manner, the scope of the present disclosure cannot be construed as being limited to these embodiments. It should be noted that, those skilled in the art can make various variants and improvements without departing from the concept of the present disclosure, and these variants and improvements shall fall within the protection scope of present disclosure as defined by the claims as attached.

**Claims**

1. A radio-frequency Power Amplifier Modules including Duplexers With LNA (L-PA Mid) device, having a medium-frequency transmitting port and a high-frequency transmitting port that are configured to connect to a radio-frequency transceiver, and a plurality of antenna ports configured to connect to an antenna, the radio-frequency L-PA Mid device comprising:

   a first transmitting circuit connected to the medium-frequency transmitting port, the first transmitting circuit being configured to receive 4-th Generation (4G) signals in a plurality of medium-frequency bands and perform amplification and filtering processing on the received 4G signals;
   a second transmitting circuit connected to the high-frequency transmitting port, the second transmitting circuit being configured to receive a 5-th Generation (5G) signal and perform amplification and filtering processing on the received 5G signal;
   a radio-frequency switching circuit connected to the first transmitting circuit, the second transmitting circuit, and the plurality of antenna ports, the radio-frequency switching circuit being configured to switch on a path between the first transmitting circuit and one of the plurality of antenna ports and a path between the second transmitting circuit and another one of the plurality of antenna ports; and
   a control module connected to the first transmitting circuit, the second transmitting circuit, and the radio-frequency switching circuit, the control module being configured to control the radio-frequency switching circuit to simultaneously switch on a radio-frequency path where the first transmitting circuit is located and a radio-frequency path where the second transmitting circuit is located, for supporting simultaneous transmission of the 4G signals in the medium-frequency bands and the 5G signal.

2. The radio-frequency L-PAMid device according to claim 1, wherein:

   the plurality of antenna ports comprises a first antenna port and a second antenna port;
   the radio-frequency switching circuit comprises a multi-channel selection switch; and
   the multi-channel selection switch has a plurality of first terminals connected to the first transmitting circuit and the second transmitting circuit, respectively, and second terminals, one of the second terminals being connected to the first antenna port, and another one of the second terminals being connected to the second antenna port.

3. The radio-frequency L-PAMid device according to claim 1, wherein:

   the plurality of antenna ports comprises a first antenna port and a second antenna port;
   the radio-frequency switching circuit comprises a first switching unit and a second switching unit;
   a first terminal of the first switching unit is connected to the first transmitting circuit;
   one second terminal of the first switching unit is connected to one selection terminal of the second switching unit;
   another second terminal of the first switching unit is connected to the first antenna port;

another selection terminal of the second switching unit is connected to the second transmitting circuit; and
a control terminal of the second switching unit is connected to the second antenna port.

4. The radio-frequency L-PA Mid device according to claim 1, wherein the first transmitting circuit comprises:

a first power amplifier configured to perform amplification processing on the received 4G signals in the plurality of medium-frequency bands, an input terminal of the first power amplifier being connected to the medium-frequency transmitting port; and
a plurality of first filtering units, each of the plurality of the first filtering units being disposed on a transmitting path of the 4G signals and connected to the radio-frequency switching circuit, the plurality of first filtering units being configured to perform filtering processing on the received 4G signals, and frequency bands of 4G signals outputted by the plurality of first filtering units being different from each other; and
a third switching unit configured to selectively switch on a transmitting path between the first power amplifier and any one of the plurality of first filtering units, a first terminal of the third switching unit being connected to an output terminal of the first power amplifier, each of second terminals of the third switching unit being connected to a corresponding one first filtering unit of the plurality of first filtering units.

5. The radio-frequency L-PA Mid device according to claim 1, wherein the second transmitting circuit comprises:

a second power amplifier configured to perform amplification processing on the received 5G signal, an input terminal of the second power amplifier being connected to the high-frequency transmitting port;
a second filtering unit connected to an output terminal of the second power amplifier and the radio-frequency switching circuit, the second filtering unit being configured to perform filtering processing on the received 5G signal.

6. The radio-frequency L-PAMid device according to claim 5, wherein the high-frequency transmitting port is further configured to receive 4G signals in a plurality of high-frequency bands, and wherein the second transmitting circuit further comprises:

a plurality of third filtering units, each of the plurality of third filtering units being disposed on a transmitting path of the 4G signals in the plurality of high-frequency bands and connected to the radio-frequency switching circuit, the plurality of third filtering units being configured to perform filtering processing on the received 4G signals, and frequency bands of 4G signals outputted by the plurality of third filtering units being different from each other; and
a fourth switching unit configured to selectively switch on a transmitting path between the second power amplifier and the second filtering unit or a transmitting path between the second power amplifier and any one of the plurality of third filtering units, a first terminal of the fourth switching unit being connected to the output terminal of the second power amplifier, each of second terminals of the fourth switching unit being correspondingly connected to the second filtering unit or one of the plurality of third filtering units.

7. The radio-frequency L-PA Mid device according to claim 6, wherein:

the 4G signals in the plurality of medium-frequency bands at least comprise a B1 frequency band, a B3 frequency band, a B34 frequency band, a B39 frequency band, a B66 frequency band, and a B25 frequency band; and
the 4G signals in the plurality of high-frequency bands at least comprises a B30 frequency band, a B7 frequency band, a B40 frequency band, and a B41 frequency band.

8. The radio-frequency L-PA Mid device according to claim 1, further having at least one receiving port configured to connect to the radio-frequency transceiver, wherein the radio-frequency L-PA Mid device further comprises:
a receiving circuit having an input terminal connected to the radio-frequency switching circuit, and an output terminal connected to the at least one receiving port, the receiving circuit being configured to receive 4G signals in a plurality of frequency bands and a 5G signal and perform filtering and amplification processing on the received signal.

9. The radio-frequency L-PA Mid device according to claim 8, wherein:

the receiving circuit comprises a fifth switching unit, a plurality of fourth filtering units, and a plurality of low noise amplifiers;
the radio-frequency switching circuit is connected to the fifth switching unit through any one of the plurality of fourth filtering units;

the fifth switching unit is connected to the at least one receiving port through any one of the plurality of low noise amplifiers;

each of the plurality of fourth filtering units is configured to perform filtering processing on the received 4G signals and the received 5G signal, frequency bands of signals outputted by the plurality of fourth filtering units being different from each other; and

the plurality of low noise amplifiers is configured to perform amplification processing on the received 4G signal and the received 5G signal.

10. The radio-frequency L-PAMid device according to claim 9, wherein:

the plurality of low noise amplifiers comprises four low noise amplifiers;

the fifth switching unit comprises four first terminals and a plurality of second terminals;

some of the plurality of second terminals of the fifth switching unit are connected to the second transmitting circuit, and some of the plurality of second terminals of the fifth switching unit are connected to the plurality of fourth filtering units in one-to-one correspondence;

each of the four first terminals of the fifth switching unit is connected to an input terminal of a corresponding one of the four low noise amplifiers; and

an output terminal of each of the four low noise amplifiers is connected to a corresponding one of the at least one receiving port.

11. The radio-frequency L-PAMid device according to claim 9, wherein:

the plurality of low noise amplifiers comprises a first low noise amplifier, a second low noise amplifier, a third low noise amplifier, and a fourth low noise amplifier;

the fifth switching unit comprises three first terminals and a plurality of second terminals, the plurality of second terminals being connected to the plurality of fourth filtering units in one-to-one correspondence;

an input terminal of the first low noise amplifier is connected to the second transmitting circuit;

an input terminal of the second low noise amplifier, an input terminal of the third low noise amplifier, and an input terminal of the fourth low noise amplifier are each connected to a corresponding one of the three first terminals of the fifth switching unit; and

an output terminal of the first low noise amplifier, an output terminal of the second low noise amplifier, an output terminal of the third low noise amplifier, and an output terminal of the fourth low noise amplifier are each correspondingly connected to one of the at least one receiving port, respectively.

12. The radio-frequency L-PAMid device according to claim 11, further comprising a sixth switching unit having first terminals respectively connected to the at least one receiving port, and second terminals respectively connected to the output terminals of the plurality of low noise amplifiers.

13. The radio-frequency L-PA Mid device according to claim 8, further having a plurality of auxiliary transmitting ports, a plurality of auxiliary transceiving ports, and a plurality of auxiliary receiving ports, the plurality of auxiliary transmitting ports, the plurality of auxiliary transceiving ports, and the plurality of auxiliary receiving ports being configured to connect to an external switching circuit, the radio-frequency L-PA Mid device further comprising a seventh switching unit, wherein:

the plurality of auxiliary transmitting ports is connected to the first transmitting circuit and the second transmitting circuit;

the plurality of auxiliary transceiving ports is connected to the radio-frequency switching circuit through the seventh switching unit; and

the plurality of auxiliary receiving ports is connected to the receiving circuit.

14. The radio-frequency L-PA Mid device according to claim 13, wherein the plurality of auxiliary transmitting ports is configured to transmit 4G signals in a B66 frequency band, a B25 frequency band, or a B30 frequency band.

15. The radio-frequency L-PA Mid device according to claim 2, further having a coupling output port, the radio-frequency L-PA Mid device further comprising:

a first coupling unit disposed on a transmitting path between the radio-frequency switching circuit and the first antenna port, the first coupling unit being configured to couple a signal on the transmitting path to output a first coupling signal through a coupling terminal of the first coupling unit;

a second coupling unit disposed on a transmitting path between the radio-frequency switching circuit and the second antenna port, the second coupling unit being configured to couple a signal on the transmitting path to output a second coupling signal through a coupling terminal of the second coupling unit; and

a coupling switch connected to the coupling terminal of the first coupling unit, the coupling terminal of the second coupling unit, and the coupling output port, the coupling switch being configured to selectively output the first coupling signal or the second coupling signal to the coupling output port.

16. A radio-frequency transceiving system, comprising:

the radio-frequency L-PA Mid device according to any one of claims 1 to 14;

an antenna assembly comprising a first antenna and a second antenna, wherein the first antenna is connected to one of the plurality of antenna ports of the radio-frequency L-PA Mid device and configured to transceive radio-frequency signals, and wherein the second antenna is connected to another one of the plurality of antenna ports of the radio-frequency L-PA Mid device and configured to transceive the radio-frequency signals; and

a radio-frequency transceiver connected to the radio-frequency L-PA Mid device.

17. The radio-frequency transceiving system according to claim 16, further comprising:

a first radio-frequency switch comprising a first terminal and a plurality of second terminals, wherein the first terminal of the first radio-frequency switch is connected to one of the plurality of antenna ports of the radio-frequency L-PA Mid device; and

a first combiner having two first terminals connected to another one of the plurality of antenna ports of the radio-frequency L-PA Mid device and the first radio-frequency switch in one-to-one correspondence, and a second terminal connected to the first antenna,

wherein the antenna assembly further comprises a third antenna and a fourth antenna, the second antenna being connected to one of the plurality of second terminals of the first radio-frequency switch, the third antenna being connected to another one of the plurality of second terminals of the first radio-frequency switch, and the fourth antenna being connected to yet another one of the plurality of second terminals of the first radio-frequency switch.

18. The radio-frequency transceiving system according to claim 17, wherein:

the first radio-frequency switch is a radio-frequency Single-Pole Four-Throw (SP4T) switch; and

the radio-frequency transceiving system is configured to support a 1T4R Sounding Reference Signal (SRS) function in a Non-Standalone Access mode and an SRS function in a Standalone Access mode.

19. The radio-frequency transceiving system according to claim 17, further comprising:

a first diversity receiving module configured to support diversity receiving control of the 4G signals in the plurality of frequency bands and the 5G signal;

a second diversity receiving module configured to support diversity receiving control of the 4G signals in the plurality of frequency bands;

a filtering module connected to the radio-frequency transceiver and configured to perform filtering processing on the received 5G signal;

a second combiner having a first terminal connected to one antenna port of the first diversity receiving module and a second terminal connected to the second antenna;

a second radio-frequency switch, one selection terminal of the second radio-frequency switch being connected to another antenna port of the first diversity receiving module, another selection terminal of the second radio-frequency switch being connected to the first radio-frequency switch, and a control terminal of the second radio-frequency switch being connected to the first terminal of the second combiner;

a third radio-frequency switch, one election terminal of the third radio-frequency switch being connected to the filtering module, another selection terminal of the third radio-frequency switch being connected to the first radio-frequency switch, and a control terminal of the third radio-frequency switch being connected to the third antenna; and

a fourth radio-frequency switch, one selection terminal of the fourth radio-frequency switch being connected to the second diversity receiving module, another selection terminal of the fourth radio-frequency switch being connected to the first radio-frequency switch, and a control terminal of the fourth radio-frequency switch being connected to the fourth antenna.

20. A communication apparatus, comprising the radio-frequency transceiving system according to any one of claims 16 to 19.

FIG. 1

FIG. 2

## FIG. 3

4G MB RFIN — First transmitting circuit (110)

4G HB RFIN — Second transmitting circuit (120)

Control module (140)

130 / 131 / 133

3, 4, 5, 6, 7, 8, 9 / 1, 2 — ANT1, ANT2

**FIG. 3**

## FIG. 4

4G MB RFIN — 111 — 113

B66 TX
B25 TX
B1 TX
B3 TX
B34/39 TX

4G HB RFIN — 121

B3 TX (112)
B1 TX
B25 TX
B66 TX
B40 TRX

B7 TX

B34/39 TX

B41/N41TRX (122)

130

3, 4, 5, 6, 7, 8, 9 / 1, 2 — ANT1, ANT2

140 / 141 / 142

PA1+ASM RFFE1 | PA1+ASM RFFE1

**FIG. 4**

FIG. 5

FIG. 6

FIG. 7

FIG. 8

FIG. 9

FIG. 10

FIG. 11

FIG. 12

FIG. 13

FIG. 14

FIG. 15

EP 4 220 974 A1

FIG. 16

FIG. 17

## INTERNATIONAL SEARCH REPORT

| International application No. |
| --- |
| PCT/CN2021/106310 |

| A. | CLASSIFICATION OF SUBJECT MATTER |
| --- | --- |
| | H04B 1/40(2015.01)i |

According to International Patent Classification (IPC) or to both national classification and IPC

| B. | FIELDS SEARCHED |
| --- | --- |

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; CNKI: 射频, 天线, 发射, 发送, 4G, 5G, LTE, NR, 中频, 高频, 放大, 滤波, 同时 VEN; USTXT; EPTXT; WOTXT: radio, antenna, transmit+, 4G, 5G, LTE, NR, medium, high, frequency, amplif+, filter+, simultaneously

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110730017 A (VIVO COMMUNICATION TECHNOLOGY CO., LTD.) 24 January 2020 (2020-01-24) description, abstract, description, paragraphs [0027]-[0119], figures 1-7 | 1, 2, 5, 7, 8, 13-16, 20 |
| A | CN 110730017 A (VIVO COMMUNICATION TECHNOLOGY CO., LTD.) 24 January 2020 (2020-01-24) description, abstract, description, paragraphs [0027]-[0119], figures 1-7 | 3, 4, 6, 9-12, 17-19 |
| A | CN 111245468 A (OPPO GUANGDONG MOBILE COMMUNICATIONS CO., LTD.) 05 June 2020 (2020-06-05) entire document | 1-20 |
| A | CN 111245469 A (OPPO GUANGDONG MOBILE COMMUNICATIONS CO., LTD.) 05 June 2020 (2020-06-05) entire document | 1-20 |
| A | US 10505700 B1 (T MOBILE USA INC.) 10 December 2019 (2019-12-10) entire document | 1-20 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 August 2021** | **03 September 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/106210**

| Patent document cited in search report | | | Publication date (day/month/year) | Patent family member(s) | | | Publication date (day/month/year) |
|---|---|---|---|---|---|---|---|
| CN | 110730017 | A | 24 January 2020 | None | | | |
| CN | 111245468 | A | 05 June 2020 | None | | | |
| CN | 111245469 | A | 05 June 2020 | None | | | |
| US | 10505700 | B1 | 10 December 2019 | WO | 2020013936 | A1 | 16 January 2020 |
| | | | | US | 2020076565 | A1 | 05 March 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020110328427